# EUROPEAN PATENT APPLICATION

(11) **EP 2 154 537 A1**
(43) Date of publication of application: **17.02.2010**
(21) Application number: 08721890.5
(22) Date of filing: 12.03.2008
(51) Int. Cl.: G01N 35/02, G01N 35/10

(54) **ANALYSIS DEVICE AND ANALYSIS METHOD**

(30) Priority: 12.03.2007 JP 2007062221
(71) Applicant: Olympus Corporation, Tokyo 151-0072 (JP)
(72) Inventor: SASAKI, Toshiyuki, Tokyo 151-0072 (JP)
(74) Representative: von Hellfeld, Axel
(86) International application number: PCT/JP2008/054474
(87) International publication number: WO 2008/126589

(57) **Abstract**

An analyzer (1) according to the present invention includes a measurement system, which dispenses a specimen in a specimen vessel (21a) into a reaction vessel (30) to perform a measurement, and analyzes the specimen based on a measurement result by the measurement system (3). The analyzer includes an RFID tag (24) that is attached to the specimen vessel (21a), stores specimen information indicative of a state of the specimen, and is capable of communicating with an external device, a reader 22 that reads the specimen information stored in the RFID tag 24, and a determining unit 42 that determines whether the specimen in the specimen vessel, to which the RFID tag 24 is attached, is in a state where a proper analysis is performable.

## Description

### TECHNICAL FIELD

The present invention relates to an analyzer that includes a measurement system, which dispenses a specimen in a specimen vessel into a reaction vessel to perform a measurement, and analyzes the specimen based on a measurement result by the measurement system. The present invention also relates to an analysis method.

### BACKGROUND ART

Analyzers have been used in examinations in various fields, such as an immunological test, a biochemical test, and a blood transfusion test, because they can perform analyses on a number of specimens that includes blood and body fluid concurrently. Also, analyzers can analyze multicomponents rapidly and accurately. In such an analyzer, a specimen in a specimen vessel is sequentially dispensed into plural reaction vessels that are sequentially transferred in line and also a reagent corresponding to an analytical item is dispensed, and a reaction that occurs between the reagent and specimen in the reaction vessel is optically measured, thereby automatically performing a specimen-component analysis, and the like (for example, see Patent Document 1).

Patent Document 1: Japanese Patent Laid-open Publication No. 1993-164763

### DISCLOSURE OF INVENTION

### PROBLEM TO BE SOLVED BY THE INVENTION

In a conventional analyzer, however, because a measurement is automatically performed on a specimen, on which an instruction to perform an analysis has been made, even if the specimen is in a state where a proper analysis is not performable due to contamination, lack of amount, or because the specimen is a defect specimen that is coagulated or hemolyzed. Therefore, there has been a problem that useless analyses are performed.

A method of managing contamination, a remaining amount, and the like of each specimen with a management apparatus, to which an analyzer is connected through a network line or the like, has been proposed. In such a method, however, there has been a problem that a large-scale and complicated system, to which an analyzer is connected by a network line, is required to be built.

The present invention has been made in view of the problems with the conventional art described above. An object of the present invention to provide an analyzer and an analysis method with which useless analyses are avoided without using a large-scale analysis system.

### MEANS FOR SOLVING PROBLEM

To solve the problem described above and achieve the object, an analyzer according to the present invention, which has a measurement system, which dispenses a specimen in a specimen vessel into a reaction vessel to perform a measurement, and analyzes the specimen based on a measurement result by the measurement system, includes: an information storage medium that is attached to the specimen vessel, stores specimen information indicative of a state of the specimen, and is capable of communicating with an external device through radio waves of a predetermined frequency; a reading unit that reads the specimen information stored in the information storage medium; and a determining unit that determines whether the specimen in the specimen vessel, to which the information storage medium is attached, is in a state where a proper analysis is performable based on the specimen information in the information storage medium read by the reading unit.

In the analyzer according to the present invention, the information storage medium stores at least one of a specimen remaining amount of the specimen in the specimen vessel, to which the information storage medium is attached, whether coagulation is observed, whether hemolysis is observed, whether white turbidity is observed, viscosity, a contamination level, a date of extraction, and an analysis order, as the specimen information.

In the analyzer according to the present invention, the analyzer further includes a control unit that inhibits the measurement system from dispensing the specimen in the specimen vessel, to which the information storage medium is attached, into the reaction vessel, when the determining unit determines that the specimen in the specimen vessel, to which the information storage medium is attached, is not in the state where a proper analysis is performable.

In the analyzer according to the present invention, the analyzer further includes a writing unit that writes information in the information storage medium, wherein the control unit causes the measurement system to dispense the specimen in the specimen vessel, to which the information storage medium is attached, into the reaction vessel, when the determining unit determines that the specimen in the specimen vessel, to which the information storage medium is attached, is in the state where a proper analysis is performable, and the writing unit writes the specimen information that has been changed through the measurement by the measurement system or has been newly obtained with the measurement result by the measurement system in the information storage medium.

In the analyzer according to the present invention, the analyzer further includes an output unit that outputs an alarm to notify that the specimen in the specimen vessel, to which the information storage medium is attached, is not in the state where a proper analysis is performable, when the determining unit determines that the specimen in the specimen vessel, to which the information storage medium is attached, is not in the state where a proper analysis is performable.

In the analyzer according to the present invention, the control unit causes the measurement system to dispense the specimen in the specimen vessel, to which the information storage medium is attached, into the reaction vessel based on a dispensation condition corresponding to the specimen information in the information storage medium read by the reading unit.

In the analyzer according to the present invention, a plurality of the measurement system is provided, and the control unit sets a measurement order for the measurement systems, the measurement order corresponding to the specimen information in the information storage medium read by the reading unit, and performs measurements on the specimen in the specimen vessel, to which the information storage medium is attached, based on the measurement order.

Also, an analysis method according to the present invention, in an analyzer that includes a measurement system, which dispenses a specimen in a specimen vessel into a reaction vessel to perform a measurement, and analyzes the specimen based on a measurement result by the measurement system, includes: reading specimen information stored in an information storage medium that is attached to the specimen vessel, stores specimen information indicative of a state of the specimen, and is capable of communicating with an external device through radio waves of a predetermined frequency; and determining whether the specimen in the specimen vessel, to which the information storage medium is attached, is in a state where a proper analysis is performable, based on the specimen information in the information storage medium read at the reading.

In the analysis method according to the present invention, the information storage medium stores at least one of a specimen remaining amount of the specimen in the specimen vessel, to which the information storage medium is attached, whether coagulation is observed, whether hemolysis is observed, whether white turbidity is observed, viscosity, a contamination level, a date of extraction, and an analysis order, as the specimen information.

In the analysis method according to the present invention, the method further includes inhibiting the measurement system from dispensing the specimen in the specimen vessel, to which the information storage medium is attached, into the reaction vessel, when it is determined at the determining that the specimen in the specimen vessel, to which the information storage medium is attached, is not in the state where a proper analysis is performable.

In the analysis method according to the present invention, the method further includes: dispensing the specimen in the specimen vessel, to which the information storage medium is attached, by the measurement system when it is determined at the determining that the specimen in the specimen vessel, to which the information storage medium is attached, is in the state where a proper analysis is performable; and writing specimen information that has changed as a result of the measurement by the measurement system or specimen information that has been newly found from a result of measurement by the measurement system, in the information storage medium.

In the analysis method according to the present invention, the method further includes outputting an alarm to notify that the specimen in the specimen vessel, to which the information storage medium is attached, is not in the state where a proper analysis is performable, when it is determined at the determining that that the specimen in the specimen vessel, to which the information storage medium is attached, is not in the state where a proper analysis is performable.

In the analysis method according to the present invention, the dispensing is performed by the measurement system based on a dispensation condition corresponding to the specimen information in the information storage medium read at the reading unit to dispense the specimen in the specimen vessel, to which the information storage medium is attached, into the reaction vessel.

In the analysis method according to the present invention, the method further includes setting a measurement order of a plurality of the measurement systems corresponding to the specimen information in the information storage medium read at the reading unit.

### EFFECT OF THE INVENTION

According to the present invention, analyses of a specimen is performed after it is determined whether the specimen in a specimen vessel, to which an information storage medium is attached, can be analyzed properly based on specimen information read out from the information storage medium that indicates the state of the specimen. Therefore, it is possible to avoid performing useless analyses without using a large-scale analysis system.

### BRIEF DESCRIPTION OF DRAWINGS

FIG. 1 is a schematic diagram showing a configuration of an analyzer according to a first embodiment.
FIG. 2 is a diagram explaining a specimen rack and a specimen vessel shown in FIG. 1.
FIG. 3 is a flowchart showing a procedure of a specimen-dispensation control in the analyzer shown in FIG. 1.
FIG. 4 is a diagram showing an example of a determination table that is referred by a determining unit shown in FIG. 1.
FIG. 5 is a diagram showing an example of a display screen of a display unit shown in FIG. 1.
FIG. 6 is a schematic diagram showing a configuration of an analyzer according to a second embodiment.
FIG. 7 is a flowchart showing a procedure of specimen-dispensation control in the analyzer shown in FIG. 6.
FIG. 8 is a diagram explaining a specimen dispensation in the analyzer shown in FIG. 6.
FIG. 9 is a diagram explaining a specimen dispensation in an analyzer of a conventional art.
FIG. 10 is a schematic diagram showing a configuration of an analyzer according to a third embodiment.
FIG. 11 is a flowchart showing a procedure of a measurement control in the analyzer shown in FIG. 10.
FIG. 12 is a schematic diagram showing another configuration of the analyzer shown in FIG. 1.

### EXPLANATIONS OF LETTERS OR NUMERALS

1, 201, 301, 401 Analyzer
2 Specimen transfer mechanism
3, 3a to 3c Measurement system
4, 204, 304 Control system
21a, 121a Specimen vessel
21b Specimen rack
22, 220, 221, 222, 223 Reader
23, 230, 231, 232, 233, 235 Writer
24 RFID tag
30, 311, 312, 313 Reaction vessel
32, 321, 322, 323 Specimen dispensing unit
32a, 37a Arm
33 Reaction table
34 Reagent storage
35 Reagent container
37 Reagent dispensing unit
38 Stirrer
39 Photometric unit
40 Cleaning unit
41, 241, 341 Control unit
42 Determining unit
43 Input unit
44 Analyzing unit
45 Storage unit
46 Output unit
47 Display unit

### BEST MODE(S) FOR CARRYING OUT THE INVENTION

Hereinafter, analyzers according to embodiments of the present invention will be described with reference to the drawings, taking analyzers that perform analysis of blood out of specimens including blood, urine, and fluid, as an example. The present invention is not limited to the embodiments. Like parts are denoted by like reference numerals throughout the drawings.

### (First embodiment)

Now, a first embodiment is described. In the first embodiment, a case where an analysis is performed on each specimen after determining whether a specimen in each specimen vessel is in such a state that an analysis thereof can be properly performed based on specimen information that is stored in an RFID tag attached to each specimen vessel and indicates a state of the specimen is described.

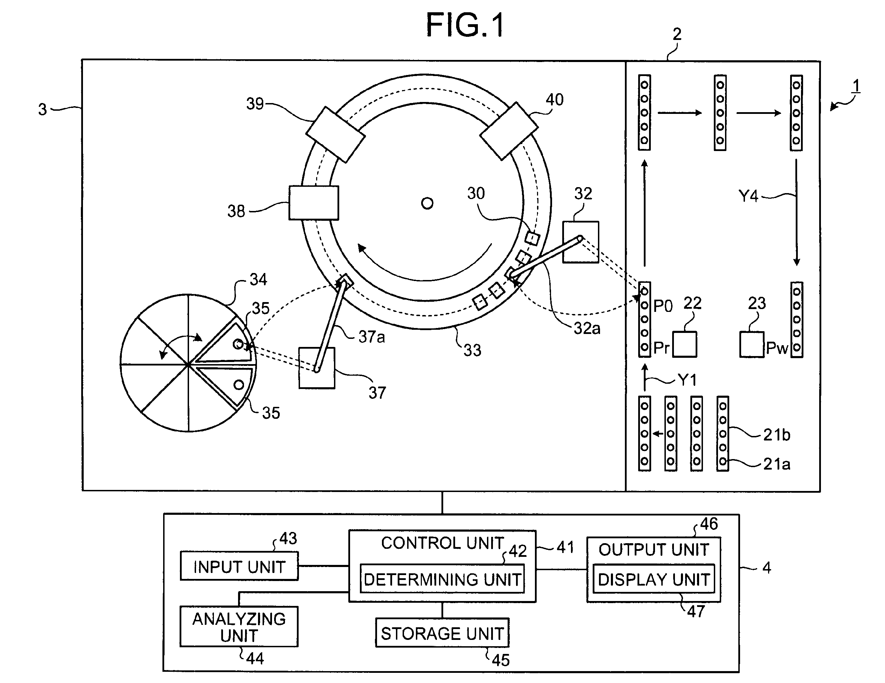

FIG. 1 is a schematic diagram showing a configuration of the analyzer according to the first embodiment. As shown in FIG. 1, an analyzer 1 includes a specimen transfer mechanism 2 that sequentially transfers specimen vessels that contain specimens to be analyzed, a measurement system 3 that dispenses specimens and reagents into reaction vessels 30 and optically measures reactions that occur in the reaction vessels 30, and a control system 4 that controls the entire analyzer 1 that has the specimen transfer mechanism 2 and the measurement system 3. The control system 4 analyzes a result of measurement performed by the measurement system 3. The analyzer 1 automatically analyzes plural specimens with the cooperation of these mechanisms.

The specimen transfer mechanism 2 holds plural specimen vessels 21a that contain blood specimen, and has plural specimen racks 21b that sequentially transfer specimens in the direction of arrows in the drawing. In the specimen transfer mechanism 2, the specimen in the specimen vessel 21a that has been transferred to a specimen dispensing position P0 is dispensed into the reaction vessel 30, which is transferred on a reaction table 33 in an aligned manner, by a specimen dispensing unit 32.

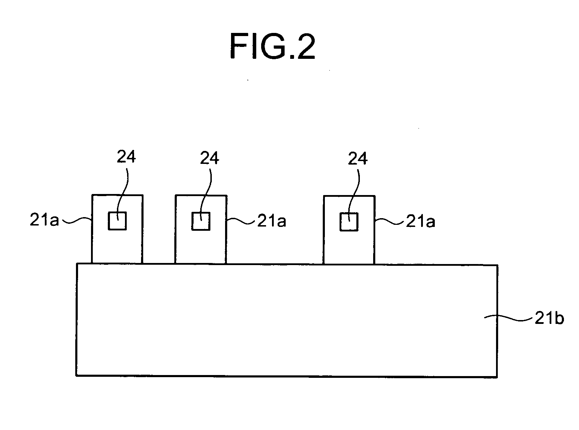

As shown in FIG. 2, on a side surface of the specimen vessel 21a held in the specimen rack 21b, an RFID tag 24 that stores specimen information indicative of the state of the specimen contained in the specimen vessel 21a is attached. The RFID tag can communicate with an external device through radio waves of a predetermined frequency. The RFID tag 24 is a tag-shaped information storage medium that is used in an RFID (radio frequency identification) system. Various kinds of information stored in the RFID tag 24 are readable, writable, and re-writable through radio waves of a predetermined frequency that instruct writing and reading.

The RFID tag 24 stores, together with ID information for identifying the specimen in the specimen vessel 21a, to which the RFID tag 24 is attached, information on at least one of a remaining amount of the specimen in the specimen vessel, whether coagulation is observed, whether hemolysis is observed, whether white turbidity is observed, viscosity, contamination level, date of extraction, and analysis order, as specimen information indicative of the state of the specimen. The specimen information is written in the RFID tag 24 before the measurement by the analyzer 1 is performed. The specimen information includes information obtained by a measurement with a preprocessing apparatus and the like, which is obtained before the measurement by the analyzer 1 is performed. Also, the RFID tag 24 can store each of amounts of plasma and cells as the remaining amount of the specimen if blood as the specimen has been separated into a plasma component and a cell component by preprocessing. Moreover, the RFID tag 24 can store a measurement history of the specimen in the specimen vessel 21a, to which this RFID tag 24 is attached.

As shown in FIG. 1, in the specimen transfer mechanism 2, a reader 22 that reads information from the RFID tag 24 and a writer 23 that writes information in the RFID tag 24 or re-writes information in the RFID tag 24 are provided. The reader 22 reads the specimen information from the RFID tag 24 of the specimen vessel 21a that has been transferred to a reading position Pr as shown by arrow Y1 through radio waves of a predetermined frequency. The writer 23 writes information in the RFID tag 24 of the specimen vessel 21a that has been transferred to a writing position Pw as shown by arrow Y4 after transferred to the specimen dispensing position P0. The writer 23 re-writes specimen information that has changed as a result of measurement by the measurement system 3, and writes specimen information that is newly obtained as a result of measurement by the measurement system 3 in the RFID tag 24. The reader 22 and the writer 23 perform, with a control by a control unit 41 described later, reading, writing, rewriting with respect to the RFID tag 24, and output information read from the RFID tag 24 to the control unit 41.

The measurement system 3 mainly has the specimen dispensing unit 32, the reaction table 33, a reagent container 34, a reagent dispensing unit 37, a stirrer 38, a photometric unit 39, and a cleaning unit 40. The specimen dispensing unit 32 has an arm 32a that is movable up and down in a vertical direction and rotatable about a vertical line that passes through a base end portion thereof as a center axis. At an end portion of this arm 32a, a specimen nozzle through which a specimen is sucked in and discharged out is attached. The specimen dispensing unit 32 has a not-shown sucking/discharging mechanism that uses a sucking/discharging syringe or a piezo-electric device. The specimen dispensing unit 32 sucks in a specimen through the specimen nozzle from the specimen vessel 21a that has been transferred to the specimen dispensing position P0 on the specimen transfer mechanism 2 described above, and discharges to dispense the specimen into the reaction vessel 30 by rotating the arm 32a in a clockwise direction in the drawing.

The reaction table 33 transfers the reaction vessel 30 to predetermined positions to perform dispensation of a specimen or a reagent to the reaction vessel 30, stirring, cleaning, or optical measurement with respect to the reaction vessel 30. The reaction table 33 is rotatable about a vertical line that passes through the center of the reaction table 33 as a rotation axis by a driving force of a not-shown driving mechanism with a control by the control unit 41. An openable and closable lid and a thermostatic bath not shown are provided above and below the reaction table 33, respectively.

The reagent container 34 can house reagent vessels 35 in which reagents to be dispensed into the reaction vessels 30 are stored. In the reagent container 34, plural rooms are arranged at regular intervals, and in each of the rooms, the reagent vessel 35 is detachably housed. The reagent container 34 can rotate in a clockwise or counterclockwise direction about a vertical line that passes through the center of the reagent container 34 as a rotation axis, and transfers a desirable one of the reagent vessels 35 to a reagent sucking position for the reagent dispensing unit 37. Above the reagent container 34, an openable and closable lid (not shown) is provided. Also, under the reagent container 34, a thermostatic bath is provided. Therefore, when the reagent vessel 35 is housed inside the reagent container 34 and the reagent container 34 is closed with the lid, the reagent in the reagent vessel 35 is kept at a constant temperature so that evaporation and degeneration of the reagent is suppressed.

The reagent dispensing unit 37 has an arm 37a to which a reagent nozzle that sucks in and discharges out a reagent is attached at an end portion similarly to the specimen dispensing unit 32. The arm 37a is movable up and down in a vertical direction and rotatatable about a vertical line that passes through a base end portion thereof as a center axis. The reagent dispensing unit 37 sucks in a reagent in the reagent vessel 35 that has been transferred to a predetermined position on the reagent container 34 through the reagent nozzle, and discharges out to dispense the reagent into the reaction vessel 30 that has been transferred to a predetermined position on the reaction table 33 by rotating the arm 37a in a clockwise direction in the drawing. The stirrer 38 stirs the specimen and the reagent dispensed into the reaction vessel 30, to promote reaction.

The photometric unit 39 measures optical properties of reaction liquid inside the reaction vessel 30 that has been transferred to a predetermined measuring position. A result of measurement by this photometric unit 39 is output to the control unit 41 and is analyzed by an analyzing unit 44.

The cleaning unit 40 sucks and discharges mixture liquid in the reaction vessel 30 for which measurement by the photometric unit 39 has been finished, and injects therein a cleaning liquid such as detergent and cleaning water and then sucks them away with a not-shown nozzle, thereby cleaning the reaction vessel 30. This cleaned reaction vessel 30 is reused. Depending on the type of examination, the reaction vessel 30 can be disposed after finishing a single measurement.

Next, the control system 4 is described. The control system 4 includes the control unit 41, an input unit 43, the analyzing unit 44, a storage unit 45, and an output unit 46. Each of components in the specimen transfer mechanism 2, the measurement system 3, and the control system 4 is electrically connected to the control unit 41.

The control unit 41 is constructed with a use of a CPU and the like, and controls processing and operations of each of components in the analyzer 1. The control unit 41 performs a predetermined input/output control of information input to and output from each of components, and also performs predetermined information processing on such information. The control unit 41 includes a determining unit 42.

The determining unit 42 determines whether a specimen in the specimen vessel 21a, to which the RFID tag 24 is attached, is in a state where a proper analysis is performable, based on the specimen information read by the reader 22. When the determining unit 42 determines that the specimen in the specimen vessel 21a, to which the RFID tag 24 is attached, is not in the state where a proper analysis is performable, the control unit 41 inhibits the measurement system 3 from dispensing the specimen in the specimen vessel 21a, to which the RFID tag 24 is attached, to the reaction vessel 30. When the determining unit 42 determines that the specimen in the specimen vessel 21a, to which the RFID tag 24 is attached, is in the state where a proper analysis is performable, the control unit 41 allows the measurement system 3 to dispense the specimen in the specimen vessel 21a, to which the RFID tag 24 is attached, to the reaction vessel 30, and has the specimen in the specimen vessel 21a, to which the RFID tag 24 is attached, dispensed into the reaction vessel 30 and subjected to the measurement.

The input unit 43 is constructed with a use of a keyboard, a mouse, and the like, and obtains various kinds of information necessary for analysis of a specimen, instruction information for analysis operation, and the like from an external source. The analyzing unit 44 performs a component analysis and the like of a specimen based on a result of measurement for optical properties of the specimen output from the photometric unit 39.

The storage unit 45 is constructed with a use of a hard disk that magnetically stores information, and a memory that loads, when the analyzer 1 performs processing, various kinds of computer programs related to the processing from the hard disk to electrically store therein. The storage unit 45 stores various kinds of information including a result of analysis of a specimen and the like. The storage unit 45 stores a determination table. Determination criteria at the determining units are based on the determination table. The determining unit 42 refers to the determination table stored in the storage unit 45 to determine whether a specimen in the specimen vessel 21a is in the state where a proper analysis is performable. The storage unit 45 can include an auxiliary storage device that can read information stored in a storage medium such as a CD-ROM, a DVD-ROM, and a PC card.

The output unit 46 is constructed with a use of a printer, a speaker, and the like, and outputs various kinds of information including a result of analysis of a specimen. The output unit 46 can output information conforming to a predetermined format to an external device through a not-shown communication network. When the determining unit 42 determines that the specimen in the specimen vessel 21a, to which the RFID tag 24 is attached, is not in the state where a proper analysis is performable, the output unit 46 outputs an alarm to notify that the specimen in the specimen vessel 21a, to which the RFID tag 24 is attached, is not in the state where a proper analysis is performable. The output unit 46 has a display unit 47 that is constructed with a use of a display.

In the analyzer 1 constructed as described above, after the specimen dispensing unit 32 dispenses a specimen in the specimen vessel 21a that has been transferred to a predetermined position by the specimen transfer mechanism 2, the reagent dispensing unit 37 dispenses a reagent in the reagent vessel 35, and the stirrer 38 stirs inside the reaction vessel 30, the photometric unit 39 performs optical measurement on reaction liquid of the specimen and the reagent, and the analyzing unit 44 analyzes a result of this measurement, thereby automatically performing component analysis and the like of the specimen. Moreover, the cleaning unit 40 cleans the reaction vessel 30, which has been transferred after the measurement by the photometric unit 39 is finished, while transferring the reaction vessel 30. Thus, a series of analysis operation is repeatedly performed successively.

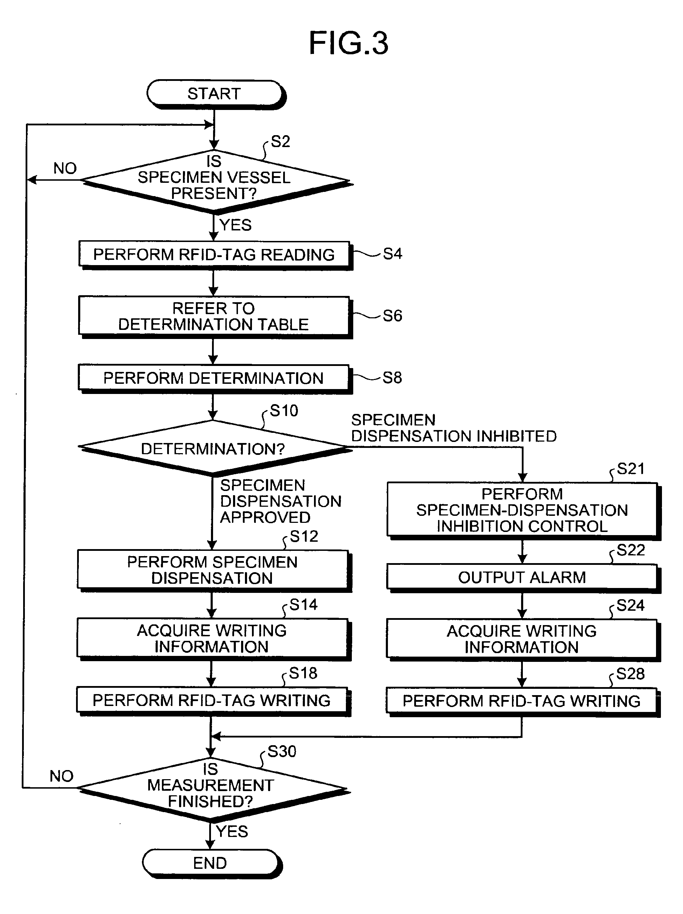

Next, a specimen-dispensation control in the analyzer 1 is described referring to FIG. 3. After the activation of the analyzer 1, as shown in FIG. 3, it is first determined whether the specimen vessel 21a that has been transferred to the reading position Pr is present (step S2). The control unit 41 repeats the determination at step S2 until it is determined that the specimen vessel 21a that has been transferred to the reading position Pr is present. When it is determined that the specimen vessel 21a that has been transferred to the reading position Pr is present (step S2: YES), the control unit 41 causes the reader 22 to perform the RFID-tag reading to read information stored in the RFID tag 24 attached to the specimen vessel 21a that has been transferred to the reading position Pr (step S4). The reader 22 outputs specimen information that is read from the RFID tag 24 attached to the specimen vessel 21a at the reading position Pr to the control unit 41.

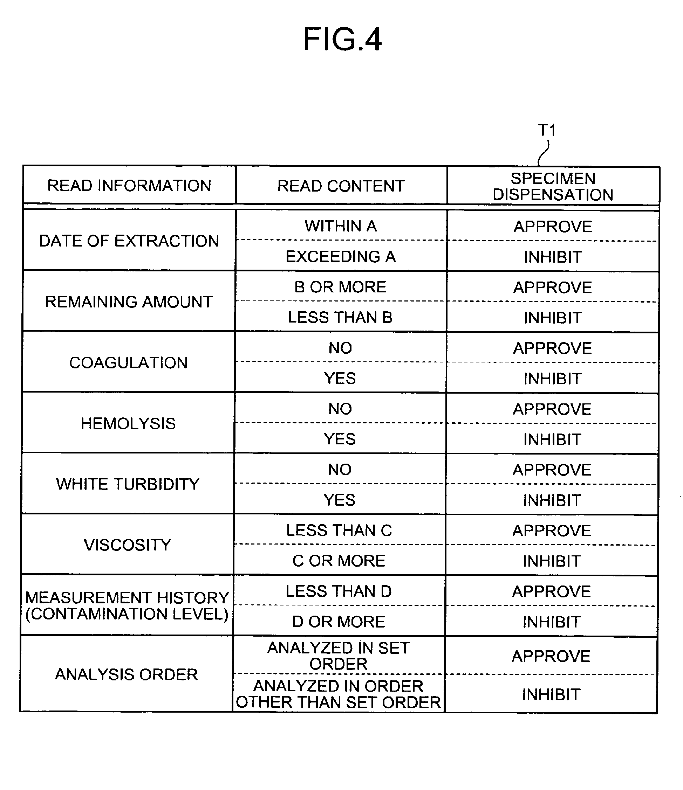

Next, the determining unit 42 refers to the determination table in the storage unit 45 (step S6). This determination table is, for example, a table in which a read content of each specimen information and whether the specimen dispensation corresponding to the read content is allowed are stored under their associated type of specimen information, as shown in a table T1 shown in FIG. 4. The determining unit 42 refers to this determination table, thereby performing the determination to determine whether a specimen in the specimen vessel 21a, to which the RFID tag 24 is attached, is in the state where a proper analysis is performable based on the specimen information read by the reader 22 (step S8).

Specifically, when a date of extraction is included in the specimen information, the determining unit 42 calculates a period from this date of extraction to the date of reading. When the period from the date of extraction to the date of reading is within a predetermined valid period, A days, for which a specimen can be maintained in a state in which a result of analysis can be guaranteed, the determining unit 42 determines that the specimen in the specimen vessel 21a, to which the RFID tag 24 is attached, is in the state where a proper analysis is performable, and makes a determination to approve the specimen dispensation, as shown in the table T1. Conversely, when the period from the date of extraction to the date of reading exceeds the valid period, A days, the determining unit 42 determines that the specimen in the specimen vessel 21a, to which the RFID tag 24 is attached, is not in the state where a proper analysis is performable, and makes a determination to inhibit the specimen dispensation.

Also, when a specimen remaining amount is included in the specimen information, and the specimen remaining amount is equal to or more than a total amount B that is a sum of an amount used for measurement and an amount required to maintain dispensation accuracy, the determining unit 42 determines that the specimen in the specimen vessel 21a, to which the RFID tag 24 is attached, is in the state where a proper analysis is performable, and makes a determination to approve the specimen dispensation, as shown in the table T1. Conversely, when the specimen remaining amount is less than B, the determining unit 42 determines that the specimen is not in the state where a proper analysis is performable because a specimen amount required for measurement is not remained in the specimen vessel 21a, to which the RFID tag 24 is attached, and makes a determination to inhibit the specimen dispensation.

Also, when information on whether coagulation is observed is included in the specimen information, the determining unit determines, when coagulation is not observed, that the specimen in the specimen vessel 21a, to which the RFID tag 24 is attached, is in the state where a proper analysis is performable because a predetermined amount of the specimen can be dispensed into the reaction vessel 30 without causing clogging of the specimen nozzle and the like, and makes a determination to approve the specimen dispensation, as shown in the table T1. Conversely, when coagulation is observed, the determining unit 42 determines that the specimen is not in the state where a proper analysis is performable because the specimen in the specimen vessel 21a, to which the RFID tag 24 is attached, can cause clogging of the specimen nozzle by performing the specimen dispensation, and makes a determination to inhibit the specimen dispensation.

Also, when information on whether hemolysis is observed is included in the specimen information, the determining unit 42 determines, when hemolysis is not observed, that that the specimen in the specimen vessel 21a, to which the RFID tag 24 is attached, is in the state where a proper analysis is performable because the specimen is properly separated into plasma and cells, and makes a determination to approve the specimen dispensation, as shown in the table T1. Conversely, when hemolysis is observed, the determining unit 42 determines that the specimen in the specimen vessel 21a, to which the RFID tag 24 is attached, is not in the state where a proper analysis is performable because hemoglobin is mixed in a plasma component, and makes a determination to inhibit the specimen dispensation.

Also, when information on whether white turbidity is observed is included in the specimen information, the determining unit 42 determines, when white turbidity is not observed, that the specimen in the specimen vessel 21a, to which the RFID tag 24 is attached, is in the state where a proper analysis is performable because optical properties can be accurately acquired, and makes a determination to approve the specimen dispensation, as shown in the table T1. Conversely, when white turbidity is observed, the determining unit 42 determines that optical properties of the specimen in the specimen vessel 21a, to which the RFID tag 24 is attached, cannot accurately be acquired and the specimen is not in the state where a proper analysis is performable, and makes a determination to inhibit the specimen dispensation.

Also, when information on viscosity is included in the specimen information, the determining unit 42 determines, when the viscosity is less than C in which range a dispensation within a dispensation error range that guarantees the analysis accuracy is enabled, that the specimen is in the state where a proper analysis is performable because the specimen in the specimen vessel 21a, to which the RFID tag 24 is attached, can be dispensed into the reaction vessel 30 within the dispensation error range that guarantees the analysis accuracy, and makes a determination to approve the specimen dispensation, as shown in the table T1. Conversely, when the viscosity is equal to or higher than C, the determining unit 42 determines that the specimen is not in the state where a proper analysis is performable and makes a determination to inhibit the specimen dispensation. When the viscosity is equal to or higher than C, an exceeding amount of the specimen in the specimen vessel 21a, to which the RFID tag 24 is attached, can be dispensed into the reaction vessel 30, which exceeds the error range that guarantees the analysis accuracy.

Also, when measurement history, that is information on a contamination level of a specimen, is included in the specimen information, the determining unit 42 determines, when the contamination level is lower than a contamination level D that is allowed in the measurement system 3, that the specimen in the specimen vessel 21a, to which the RFID tag 24 is attached, can be analyzed by the measurement system 3, and makes a determination to approve the specimen dispensation, as shown in the table T1. Conversely, when the contamination level is equal to or higher than D, the determining unit 42 makes a determination to inhibit the specimen dispensation because the specimen dispensing unit 32, the reaction vessel 30, and the like in the measurement system 3 are going to be contaminated by dispensing the specimen in the specimen vessel 21a, to which the RFID tag 24 is attached.

Moreover, when information on an analysis order of analyzers is included in the specimen information, the determining unit 42 identifies the analysis order of the analyzer 1 based on the measurement log of other analyzers. This analysis order is set, for example, in ascending order of contamination level so as to satisfy the allowable contamination level of each analyzer. The determining unit 42 determines, when analyses have been performed in the set analysis order, that the specimen in the specimen vessel 21a, to which the RFID tag 24 is attached, can be analyzed by the measurement system 3, and makes a determination to approve the specimen dispensation, as shown in the table T1. Conversely, when analyses have not been performed in the set analysis order, the determining unit 42 makes a determination to inhibit the specimen dispensation because a specimen of high contamination level can be dispensed.

After the determination at step S8 is performed by the determining unit 42 as described above, the control unit 41 determines whether the determination made by the determining unit 42 is to approve the specimen dispensation or to inhibit the specimen dispensation (step S10).

When it is determined that the determination made by the determining unit 42 is to approve the specimen dispensation (step S10: SPECIMEN DISPENSATION APPROVED), the control unit 41 causes the specimen dispensing unit 32 to dispense a predetermined amount of specimen from the specimen vessel 21a, to which the RFID tag 24 is attached, into the reaction vessel 30 in order to perform the specimen dispensation (step S12). To this reaction vessel 30, to which the specimen is dispensed, a reagent is dispensed by the reagent dispensing unit 37. After stirring by the stirrer 38, optical properties are measured by the photometer unit 39, and then, the reaction vessel 30 is disposed or cleaned by the cleaning unit 40. As described, in the analyzer 1, only the specimen in the state where a proper analysis is performable is dispensed into the reaction vessel 30 to perform the measurement. Therefore, useless analyses with respect to a specimen that has a problem, such as lack of remaining amount or being a defect specimen, are not performed.

The control unit 41 then performs writing-information acquisition to acquire writing information to be written in the RFID tag 24 that is attached to the specimen vessel, 21a from which the specimen dispensation is completed (step S14). This writing information may include a new specimen remaining amount that is a value obtained by subtracting a specimen amount that has been dispensed by the specimen dispensation from the specimen remaining amount, information on white turbidity or hemolysis that are newly observed by the optical measurement of the specimen by the measurement system 3, information on coagulation of the specimen that is found from fluctuation of sucking pressure, a new contamination level obtained by adding the contamination level of the measurement system 3, the date of measurement by the measurement system 3, and information indicating that the analysis has been performed in the set analysis order as the measurement history, and the like.

Subsequently, after transferring the specimen vessel 21a, to which the RFID tag 24 corresponding to the acquired writing information is attached, to the writing position Pw, the control unit 41 performs the RFID-tag writing to write the writing information in the RFID tag 24 corresponding to the acquired writing information (step S18). As described, in the analyzer 1, the information is updated or written in the RFID tag 24 at each measurement. In other words, in the analyzer 1, specimen information that substantially matches the current state of the specimen is stored in the RFID tag 24 that is attached to the specimen vessel 21a, and the specimen and the RFID tag 24 storing the specimen information that substantially matches the current state of the specimen are managed as a pair. Therefore, the analyzer 1 can obtain the specimen information indicating the current state of the specimen in the specimen vessel 21a, to which the RFID tag 24 is attached, accurately and easily by reading the information in the RFID tag 24.

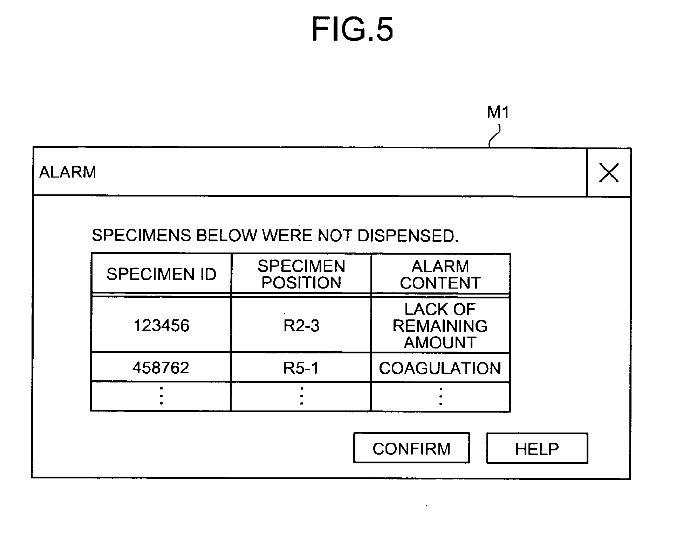

In contrast, when it is determined that the determination made by the determining unit 42 is to inhibit the specimen dispensation (step S10: SPECIMEN DISPENSATION INHIBITED), the control unit 41 performs a specimen-dispensation inhibition control to inhibit the specimen dispensation with respect to the specimen dispensing unit 32 (step S21). The control unit 41 then causes the output unit 46 to output the alarm to notify that the specimen in the specimen vessel 21a, to which the RFID tag 24 is attached, is not in the state where a proper analysis can be performed (step S22). In this case, the display unit 47 outputs the alarm for each specimen for which the determination to inhibit the specimen dispensation is made by the determining unit 42, or can output the alarm for plural specimens that are determined to inhibit the specimen dispensation by the determining unit 42 at once, for example, as shown in an alarm menu M1 in FIG. 5. In the alarm menu M1, for example, a list is shown in which the specimen ID of a specimen for which the determining unit 42 made the determination to inhibit the specimen dispensation, the specimen rack number and the position in the specimen rack at which the specimen is contained, and the content of alarm are associated. An operator of the analyzer 1 can see the position of the specimen for which the specimen dispensation is inhibited and the content of the alarm immediately by confirming the alarm menu M1.

The control unit 41 then performs the writing-information acquisition to acquire writing information to be written in the RFID tag 24 that is attached to the specimen vessel 21a containing the specimen (step S24). The writing information may include information indicating that the determination to inhibit the specimen dispensation is made in the measurement system 3, information indicating a reason for the determination to inhibit the specimen dispensation, and the like. Subsequently, after transferring the specimen vessel 21a, to which the RFID tag 24 corresponding to the acquired writing information is attached, to the writing position Pw, the control unit 41 performs the RFID-tag writing to write the writing information in the RFID tag 24 corresponding to the acquired writing information (step S28). By reading the information in the RFID tag 24, other analyzers 1 and the like can recognize that the specimen in the specimen vessel 21a, to which this RFID tag 24 is attached, has not been analyzed in the analyzer 1.

The control unit 41 then determines whether the measurement in the analyzer 1 has been finished (step S30). When the control unit 41 determines that the measurement in the analyzer 1 has been finished (step S30: YES), the control unit 41 ends the measurement in the analyzer 1. Conversely, when the control unit 41 determines that the measurement in the analyzer 1 has not been finished (step S30: NO), the process returns to step S2, and the control unit 41 then determines whether a specimen vessel 21a that is a subject of the dispensation is at the reading position Pr. Based on the information in the RFID tag 24, the control unit 41 determines whether the dispensation for the specimen contained in the specimen vessel 21a is performable.

As described, in the analyzer 1 according to the first embodiment, the specimen and the RFID tag 24 are managed as a pair, and by reading and writing the specimen information from and to the RFID tag 24, specimen information that substantially matches the current state of the specimen can be acquired or updated in the analyzer 1. Thus, the analyzer 1 manages the specimen by reading the RFID tag 24 within the analyzer 1. Therefore, it is not required to build a large-scale complicated system, in which analyzers are connected through a network line as in the conventional art, and the system can be built in a simple configuration.

Furthermore, in the analyzer 1, after it is determined whether the specimen in the specimen vessel 21a, to which the RFID tag 24 is attached, is in the state where a proper analysis is performable based on the specimen information read from the RFID tag 24 that is attached to the specimen vessel 21a, the dispensation of the specimen is performed.

In a conventional analyzer, specimens are automatically dispensed into reaction vessels sequentially, and analyses therefor are automatically performed sequentially. Thus, there has conventionally been a case where an unreliable analysis result is acquired as a result of analyzing a specimen whose effective period has been expired. Also, there has conventionally been a case where the dispensation of a specimen is performed that lacks the amount of, e.g., plasma. This results in sucking cell components in place of plasma that is the subject of the analysis because the amount of plasma is not enough. Also, there has conventionally been a case where clogging of a specimen nozzle and the like occurs and a predetermined amount of specimen cannot be dispensed into a reaction vessel as a result of performing the dispensation of a specimen that has coagulation. Also, there has conventionally been a case where a hemolyzed specimen, in which hemoglobin is mixed in a plasma component, is performed, and an accurate optical measurement cannot be performed. Also, there has conventionally been a case where an accurate optical measurement of a specimen cannot be performed as a result of analyzing a white turbidity specimen, because the plasma component that is the subject of measurement is opaque. Also, there has conventionally been a case where a specimen cannot be dispensed in the required dispensation accuracy, and the analysis accuracy of the specimen cannot be maintained when the viscosity thereof is out of a predetermined reference range. Also, there has conventionally been a case where a specimen that has been contaminated by a previous analyzer is analyzed and a proper analysis result cannot be acquired because of the specimen contamination effect, and also the analyzer itself is contaminated. Furthermore, there has conventionally been a case where a specimen that has not been measured in a set analysis order is analyzed. In this case, the specimen can have a contamination level exceeding an allowable level of the analyzer, and a proper analysis result cannot be acquired because of the specimen contamination effect. Further, the apparatus itself is contaminated.

In contrast, in the analyzer 1 according to the first embodiment, the specimen information is written in the RFID tag 24, and by reading this specimen information, after checking whether it is a specimen not in the state where a proper analysis is performable due to expiration of the effective period, lack of remaining amount of a specimen, presence or absence of coagulation, hemolysis, and white turbidity in a specimen, a specimen having viscosity exceeding a reference range, the contamination level of a specimen, and an error in the measurement order, a specimen is dispensed to perform the measurement. In other words, in the analyzer 1, a specimen not in the state where a proper analysis is performable is not dispensed, and the measurement is not performed. Therefore, in the analyzer 1, useless analyses on a specimen not in the state where a proper analysis is performable are avoided, and highly reliable analyses can be efficiently performed.

### (Second embodiment)

Next, a second embodiment is described. In the second embodiment, a case in which the reliability of a specimen dispensation is improved by using a specimen dispensation condition corresponding to specimen information stored in an RFID tag is described.

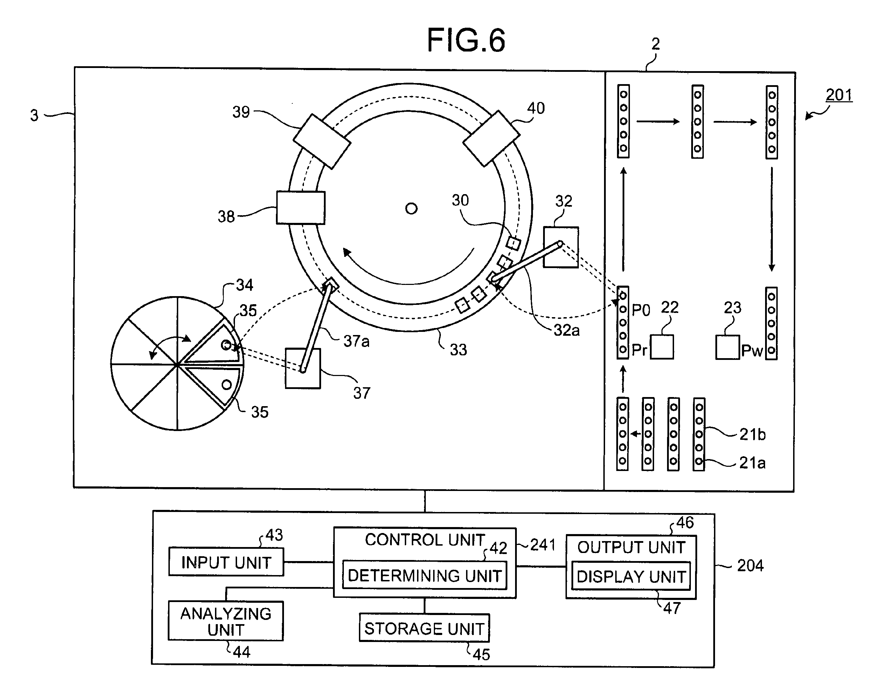

FIG. 6 is a schematic diagram showing a configuration of an analyzer according to the second embodiment. A shown in FIG. 6, an analyzer 201 according to the second embodiment has a control system 204 including a control unit 241 in place of the control unit 41 when compared with the analyzer 1 shown in FIG. 1.

The control unit 241 has a similar function as the control unit 41 shown in FIG. 1, and further, causes the measurement system 3 to dispense a specimen in the specimen vessel 21a, to which the RFID tag 24 is attached, into the reaction vessel 30 based on a dispensation condition corresponding to the specimen information read by the reader 22 from the RFID tag 24. The control unit 241 causes the specimen dispensing unit 32 to dispense the specimen in the specimen vessel 21a into the reaction vessel 30 with the specimen nozzle submerged in depth corresponding to the remaining amount of the specimen read by the reader 22. Furthermore, the control unit 241 causes the specimen dispensing unit 32 to dispense the specimen in the specimen vessel 21a into the reaction vessel 30 with sucking/discharging pressure, sucking/discharging speed, or withdrawing timing of the specimen nozzle corresponding to a value of viscosity read by the reader 22.

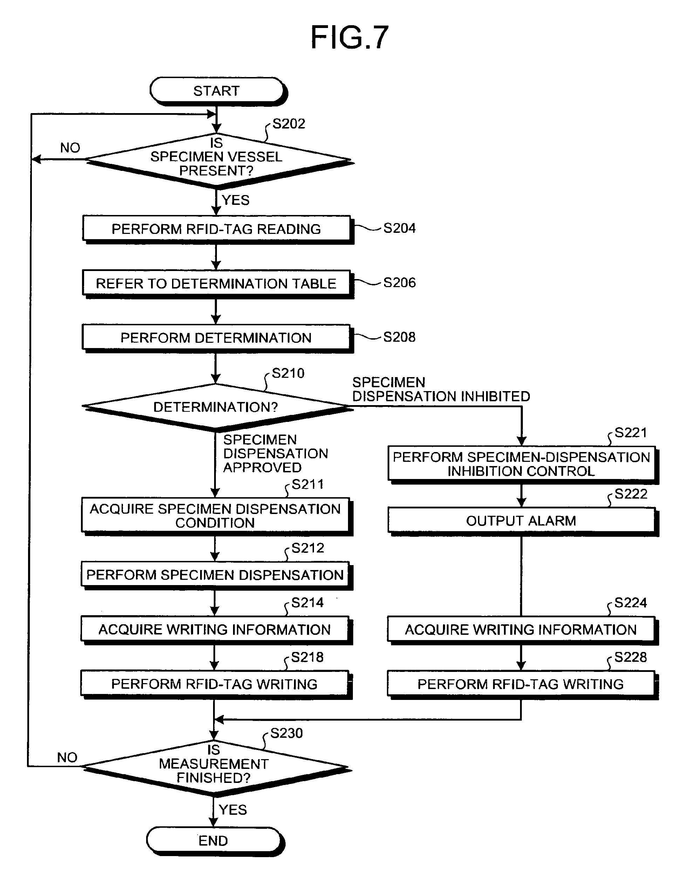

Next, a specimen-dispensation control in the analyzer 201 shown in FIG. 6 is described referring to FIG. 7. As shown in FIG. 7, the control unit 241 performs, in the same manner as the procedure from step S2 to step S10 shown in FIG. 3, the determination whether the specimen vessel 21a is present at the reading position Pr (step S202), the RFID-tag reading (step S204), the determination-table referring (step S206), the determination (step S208), and the determination for a content of a result of the determination at step S208 (step S210).

When it is determined that the determination made by the determining unit 42 is to approve the specimen dispensation (step S210: SPECIMEN DISPENSATION APPROVED), the control unit 241 acquires a specimen dispensation condition corresponding to the specimen information read from the RFID tag 24 (step 5211). This specimen dispensation condition is, for example, stored in the storage unit 45 in an associated manner with a content of each specimen information. Next, the control unit 241 causes the specimen dispensing unit 32 to perform the specimen dispensation based on the acquired specimen dispensation condition (step S212).

Subsequently, the control unit 241 performs, in the same manner as the procedure from step S14 to step S18 shown in FIG. 3, the writing-information acquisition (step S214) and the RFID-tag writing (step S218). When it is determined that the determination made by the determining unit 42 is to inhibit the specimen dispensation (step S210: SPECIMEN DISPENSATION INHIBITED), the control unit 241 performs, in the same manner as the procedure from step S21 to step S28 shown in FIG. 3, the specimen-dispensation inhibition (step S221), the alarm output (step S222), the writing-information acquisition (step S224), and the RFID-tag writing (step S228). The control unit 241 then performs the measurement-completion determination similarly to step S30 shown in FIG. 3, and the specimen-dispensation control ends.

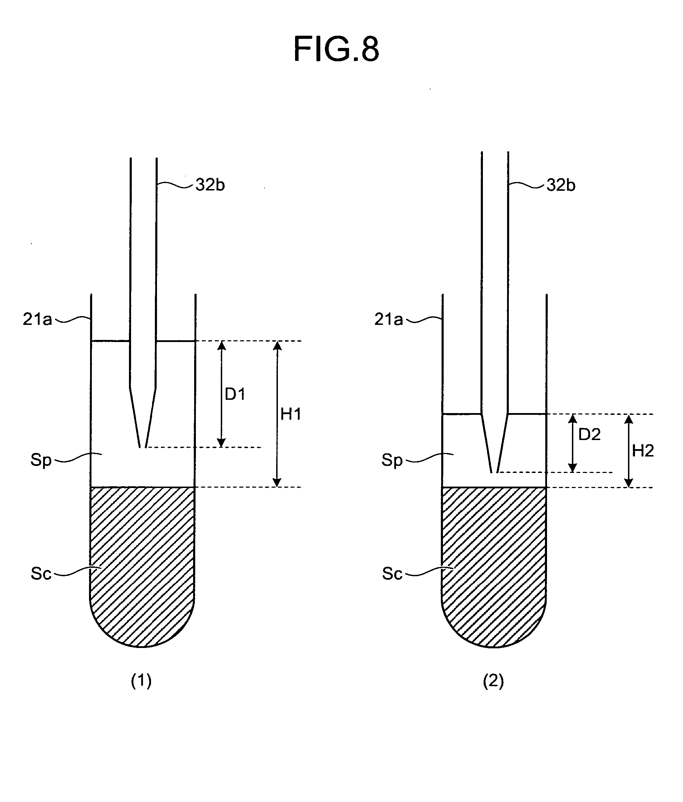

Next, the specimen-dispensation-condition acquisition shown in FIG. 7 and the specimen dispensation are described. FIG. 8 is a diagram explaining the dispensation in the analyzer 201. In the analyzer 201, the control unit 241 causes the specimen dispensing unit 32 to dispense a specimen in the specimen vessel 21a into the reaction vessel 30 with the specimen nozzle submerged at depth corresponding to the specimen remaining amount read by the reader 22.

The control unit 241 acquires a depth H1 or H2 from the liquid surface of a plasma component Sp in the specimen vessel 21a based on the information read from the RFID tag 24. The blood specimen is separated into a plasma component and a cell component by preprocessing, and approximately 40% to 50% thereof is the plasma component. The control unit 241 acquires a remaining amount of a cell component Sc and the plasma component Sp in the specimen vessel 21a based on the specimen remaining amount, the measurement history, and the like recorded in the RFID tag 24, and calculates the depth H1 from the liquid surface of the plasma component Sp.

As shown in FIG. 8 (1), for example, when the plasma component Sp is contained in the specimen vessel 21a with the depth H1 from the liquid surface, the control unit 241 submerges a specimen nozzle 32b to a depth D1 (<H1) such that the specimen nozzle 32b of the specimen dispensing unit 32 is not submerged into the cell component Sc, to suck up the specimen. As shown in FIG. 8 (2), when a less amount of the plasma component Sp compared to that of FIG. 8 (1) is contained in the specimen vessel 21a, and when the plasma component is contained with the depth H2 from the liquid surface in the specimen vessel 21a, the control unit 241 submerges the specimen nozzle 32b to a depth D2 (<H2) such that the specimen nozzle 32b of the specimen dispensing unit 32 is not submerged into the cell component Sc, to suck up the specimen.

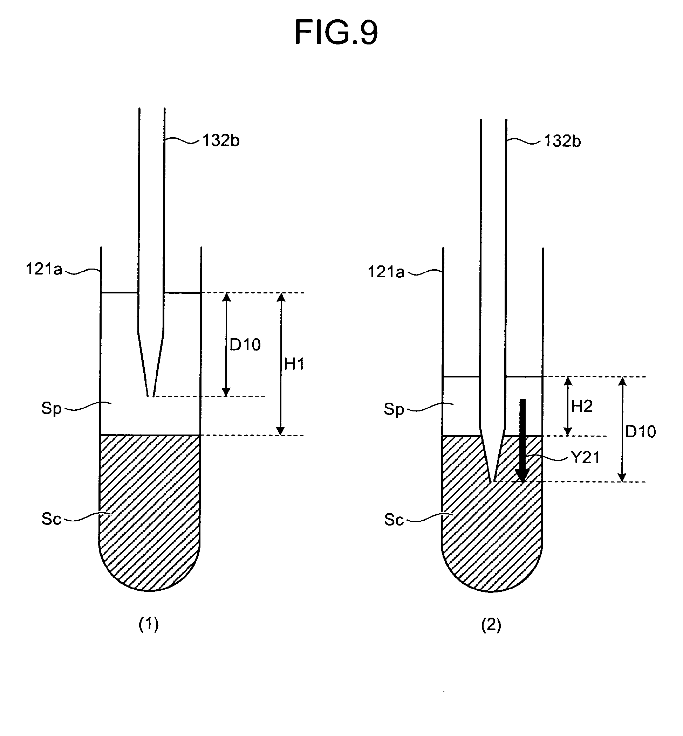

In the conventional art, as shown in FIG. 9, a specimen is sucked by putting a specimen nozzle 132b into a specimen to a fixed depth D10 without considering the amount of the plasma component Sp remaining in the specimen vessel 21a. When the specimen nozzle 132b is submerged to the depth D10, if the remaining amount of the plasma component Sp is large enough and the depth H1 from the liquid surface of the plasma component is deeper than the submerging depth D10 as shown in FIG. 9 (1), the specimen nozzle 132b is not submerged into the cell component Sc and only the plasma component Sp can be sucked up. However, if the remaining amount of the plasma component Sp is small and the depth H2 from the liquid surface of the plasma component Sp is shallower than the submerging depth D10 as shown by arrow Y21 in FIG. 9 (2), the end of the specimen nozzle 132b is put into the cell component Sc, and the cell component is sucked up instead of the plasma component.

In contrast, in the analyzer 201, the depth from the liquid surface of the plasma component that is the subject of analysis is acquired based on the information read from the RFID tag 24, and the submerging depth of the specimen nozzle 32b is set so as not to be submerged into the cell component. Therefore, in the analyzer 201, only the plasma component that is the subject of analysis can be reliably sucked up without erroneously sucking the cell component that is not the subject of analysis.

Furthermore, in the analyzer 201, the control unit 241 controls the specimen dispensing unit 32 to perform the specimen dispensation with the sucking/discharging pressure, the sucking/discharging speed, or the specimen-nozzle withdrawing timing corresponding to a value of the viscosity of a specimen read by the reader 22. An amount to be actually sucked or discharged varies depending on the viscosity of a liquid even when the liquid is sucked or discharged under the same conditions of the sucking pressure, the discharging pressure, the sucking speed, and the discharging speed. Therefore, in the analyzer 201, relation between viscosity and the sucking pressure, the discharging pressure, the sucking speed, or the discharging speed, with which a predetermined amount can be sucked or discharged, is calculated in advance, and based on this relation, the sucking/discharging pressure and the sucking/discharging speed corresponding to the viscosity read from the RFID tag 24 are set. As a result, in the analyzer 201, the specimen dispensation is performed with the sucking/discharging pressure and the sucking/discharging speed corresponding to the viscosity of each specimen, and therefore, a predetermined amount of a specimen can be accurately dispensed into the reaction vessel 30.

In addition, compared to liquid that has low viscosity, liquid that has high viscosity takes more time until a predetermined amount of liquid is completely discharged out of a nozzle because of the high viscosity. Therefore, it is preferable that a period from the discharging timing of a specimen to a withdrawing timing of the specimen nozzle 32b is set long to reliably dispense a specimen that has high viscosity into the reaction vessel 30 for an amount as set. In the analyzer 201, the withdrawing timing of the specimen nozzle 32b corresponding to each viscosity of a specimen is set in advance, and withdrawal of the specimen nozzle 32b in the specimen dispensation is performed at the withdrawing timing corresponding to the viscosity read from the RFID tag 24. As a result, in the analyzer 201, the specimen nozzle 32b is withdrawn at the withdrawing timing corresponding to each viscosity of a specimen, and therefore, a predetermined amount of a specimen can be reliably dispensed into the reaction vessel 30 as set.

As described, in the second embodiment, the specimen dispensation is performed based on a dispensation condition corresponding to the specimen information read from the RFID tag 24. Therefore, in addition to the effect similar to that of the first embodiment, highly reliable analyses in which the dispensation accuracy is further improved compared to the first embodiment can be performed.

### (Third embodiment)

Next, a third embodiment is described. In the third embodiment, a case in which system contamination is prevented by setting a measurement order of plural measurement systems so as to satisfy the allowable contamination level in each of the measurement systems based on specimen information stored in an RFID tag is described.

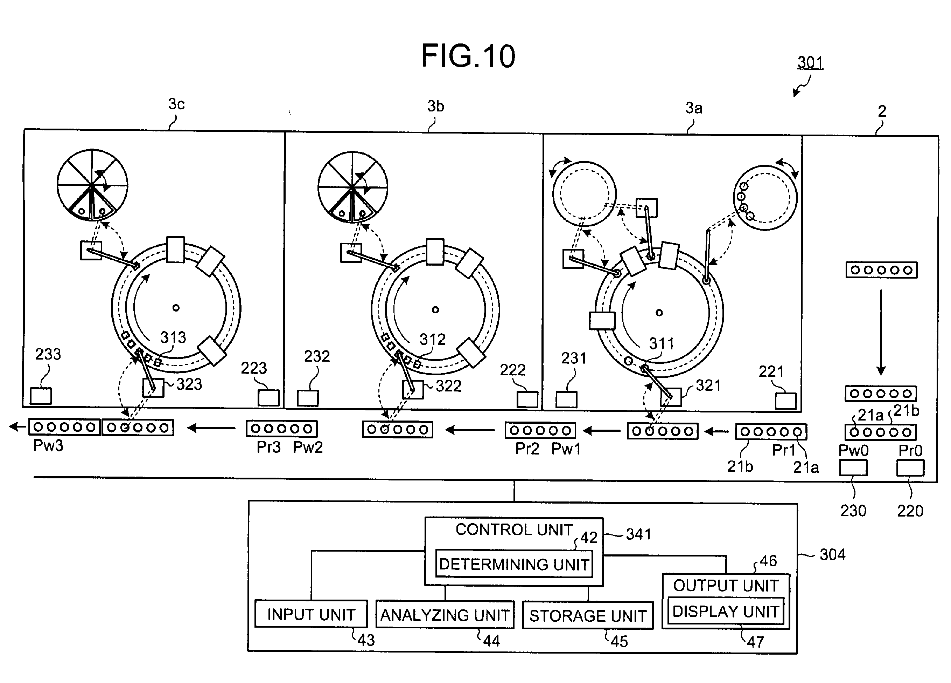

FIG. 10 is a schematic diagram showing a configuration of an analyzer according to the third embodiment. As shown in FIG. 10, an analyzer 301 according to the third embodiment has plural measurement systems 3a to 3c. The measurement systems 3a to 3c may perform measurements corresponding to different analytical items or measurements corresponding to the same analytical items. A description is made assuming that the measurement system 3a performs measurements corresponding to so-called immunological test, and the measurement systems 3b and 3c perform measurements corresponding to so-called biochemical test.

The analyzer 301 has a control system 304 including a control unit 341 in place of the control unit 41 shown in FIG. 1. The control unit 341 has a similar function as the control unit 41 shown in FIG. 1, and further, sets a measurement order corresponding to specimen information read from the RFID tag 24 by the reader 22 with respect to the measurement systems 3a to 3c, and controls to perform measurements of a specimen in a specimen vessel, 21a to which the RFID tag 24 is attached, in this measurement order.

The analyzer 301 has the specimen transfer mechanism 2 that transfers the specimen rack 21b on which the specimen vessel 21a is held to specimen dispensation positions in the respective measurement systems 3a to 3c, and to respective reading positions and the writing positions, similarly to the analyzer 1. In the analyzer 301, the specimen transfer mechanism 2 has a reader 220 that reads information from the RFID tag 24 on the specimen vessel 21a held on the specimen rack 21b before transferred to the measurement systems 3a to 3c. The reader 220 reads the specimen information from the RFID tag 24 of the specimen vessel 21a that is transferred to the reading position Pr0. The control unit 341 sets a measurement order for this specimen based on the specimen information read by the reader 220. Further, the specimen transfer mechanism 2 has a writer 230 that writes information in the RFID tag 24 of the specimen vessel 21a held on the specimen rack 21b before transferred to the measurement systems 3a to 3c. The writer 230 writes information in the RFID tag 24 of the specimen vessel 21a that is transferred to the writing position Pw0. The control unit 341 causes the writer 230 to write the order set based on the specimen information read from the RFID tag 24 in this RFID tag 24.

In the measurement system 3a, a reader 221 that reads at a reading position Pr1 the RFID tag 24 attached to the specimen vessel 21a before transferred to a specimen dispensing unit 321, and a writer 231 that writes at a writing position Pw1 information into the RFID tag 24 attached to the specimen vessel 21a after the specimen dispensation into a reaction vessel 311 is finished are provided. In the measurement system 3b, a reader 222 that reads at a reading position Pr2 the RFID tag 24 attached to the specimen vessel 21a before transferred to a specimen dispensing unit 322, and a writer 232 that writes at a writing position Pw2 information into the RFID tag 24 attached to the specimen vessel 21a after the specimen dispensation into a reaction vessel 312 is finished are provided. In the measurement system 3c, a reader 223 that reads at a reading position Pr3 the RFID tag 24 attached to the specimen vessel 21a before transferred to a specimen dispensing unit 323, and a writer 233 that writes at a writing position Pw3 information into the RFID tag 24 attached to the specimen vessel 21a after the specimen dispensation into a reaction vessel 313 is finished are provided. Similarly to the writer 23 in the first and the second embodiments, the writers 231 to 233 re-write specimen information that has changed as a result of the measurement performed by each of the measurement systems 3a to 3c, and writes specimen information that is newly obtained as a result of the measurement by each of the measurement systems 3a to 3c.

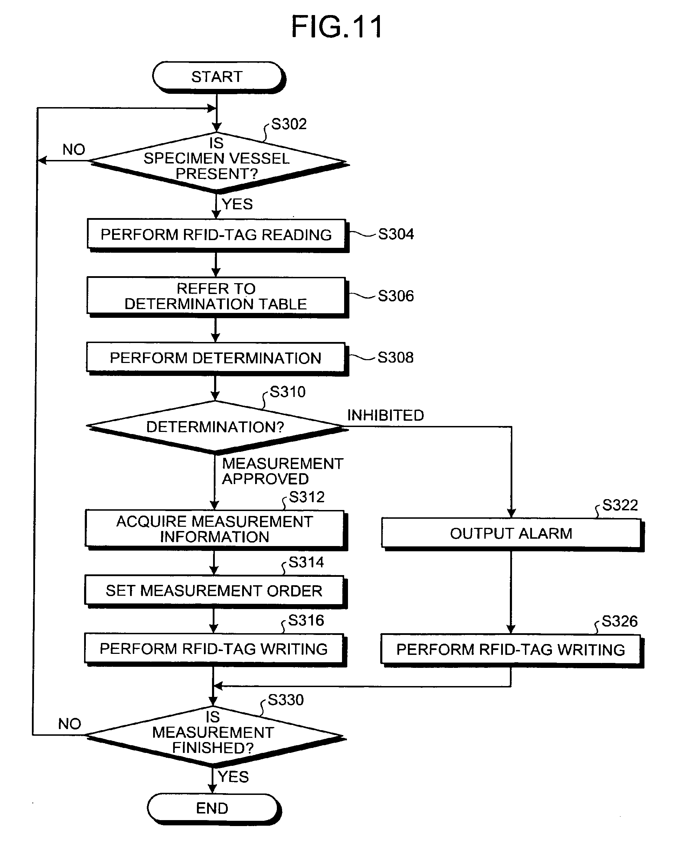

Next, referring to FIG. 11, a measurement-order setting in the analyzer 301 shown in FIG. 10 is described. After the activation of the analyzer 301, the control unit 341 first determines whether the specimen vessel 21a that has been transferred to the reading position Pr0 is present as shown in FIG. 11 (step S302). The control unit 341 repeats the determination at step S302 until it is determined that the specimen vessel 21a that has been transferred to the reading position Pr0 is present. When it is determined that the specimen vessel 21a that has been transferred to the reading position Pr0 is present (step S302: YES), the control unit 341 causes the reader 220 to perform the RFID-tag reading to read information stored in the RFID tag 24 attached to the specimen vessel 21a that has been transferred to the reading position Pr0 (step S304). The reader 220 outputs specimen information that is read from the RFID tag 24 attached to the specimen vessel 21a at the reading position Pr0 to the control unit 341.

Next, the determining unit 42 refers to the determination table shown in FIG. 4 in the storage unit 45 (step S306). The determining unit 42 refers to this determination table, thereby performing the determination to determine whether a specimen in the specimen vessel 21a, to which the RFID tag 24 is attached, is in the state where a proper analysis is performable based on the specimen information read by the reader 220 (step S308). The determining unit 42 determines whether the specimen in the specimen vessel 21a, to which the RFID tag 24 is attached, is in the state where a proper analysis is performable based on the date of extraction, the specimen remaining amount, whether coagulation is observed, whether hemolysis is observed, whether white turbidity is observed, the viscosity, the contamination level, and the analysis order read by the reader 220 from the RFID tag 24, similarly to step S8 shown in FIG. 3. When the determining unit 42 determines that the specimen is in the state where a proper analysis is performable, the determining unit 42 makes a determination to approve the measurement on this specimen. When the determining unit 42 determines that the specimen is not in the state where a proper analysis is performable, the determining unit 42 makes a determination to inhibit the measurement on this specimen. Subsequently, the control unit 341 determines whether the determination made by the determining unit 42 is to approve the measurement or to inhibit the measurement (step S310).

When the control unit 341 determines that the determination made by the determining unit 42 is to approve the measurement (step S310: MEASUREMENT APPROVED), the control unit 341 acquires measurement information such as the contamination level, the measurement items, the measurement history, and the specimen remaining amount of this specimen (step S312). The control unit 341 then sets the measurement order of the measurement systems 3a to 3c for this specimen (step S314), and performs the RFID-tag writing to write the set measurement order in the RFID tag 24 (step S316).

The control unit 341 sets, for example, the measurement order for a specimen that is instructed to be subjected to analyses of a biochemical test item that has a high level of contamination and an immunological test item that has a low level of contamination. The control unit 341 sets the measurement order such that the measurement system 3a, which measures the immunological test item with a low level of contamination, measures the specimen first and then the measurement system 3b, which measures the biochemical test item with a high level of contamination, measures the specimen. The analyzer 301 can improve the reliability in the immunological test item by causing the measurement system 3a to measure the immunological test item for which an accurate analysis result can be obtained only with a specimen whose contamination level is low before the specimen is contaminated by the measurement system 3b that measures the biochemical test item.

When the control unit 341 determines that the determination made by the determining unit 42 is to inhibit the measurement (step S310: INHIBITED), similarly to step S22 shown in FIG. 3, the control unit 341 causes the output unit 46 to output the alarm to notify that the specimen in the specimen vessel 21a, to which the RFID tag 24 is attached, is not in the state where a proper analysis can be performed (step S322). The control unit 341 then performs the RFID-tag writing to write that the specimen is not in the state where a proper analysis is performable in the RFID tag 24 attached to the specimen vessel 21a containing the specimen for which the determination to inhibit the measurement is made (step S326). The control unit 341 then performs the measurement-completion determination similarly to step S30 shown in FIG. 3 (step S330), and the specimen-dispensation control ends.

As described in the third embodiment, the measurement order of plural measurement systems is set based on specimen information read from the RFID tag, and therefore, contamination of a specimen can be reliable prevented compared to the case of the first embodiment, and highly reliable analyses can be performed.

The analyzer 301 according to the third embodiment may, of course, perform the procedure shown in FIG. 3 or FIG. 7 to determine whether a specimen that is the subject of analysis is in the state where a proper analysis can be performed, prior to the measurement by each of the measurement systems, and perform the specimen dispensation based on a dispensation condition corresponding to specimen information of the specimen similarly to the first embodiment or the second embodiment.

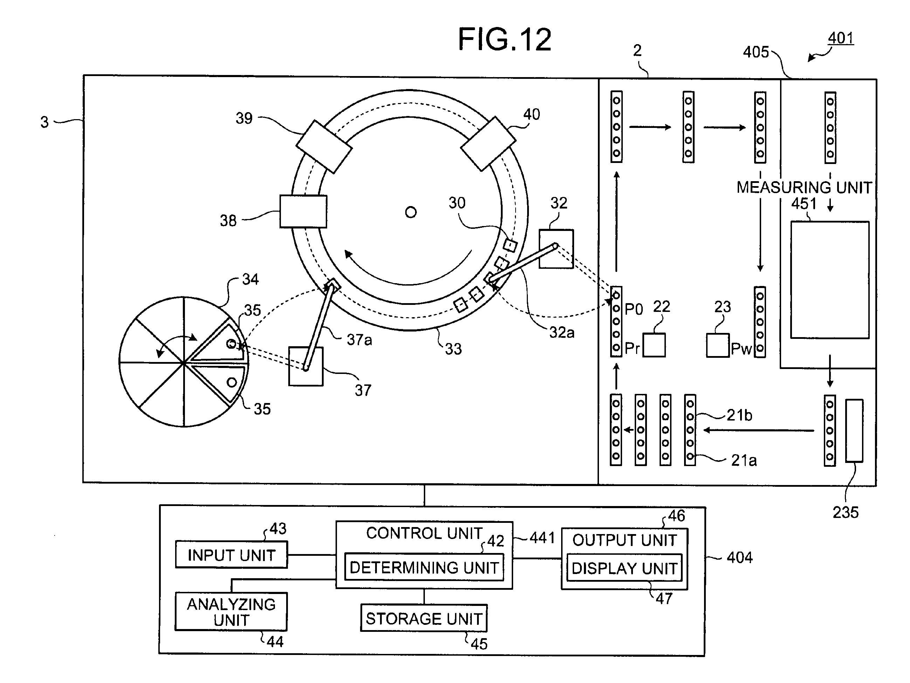

Although the first to the third embodiments are described taking the analyzers 1, 201, and 301 that perform measurements on a specimen that is obtained by separating blood by a different preprocessing apparatus as an example, an analyzer 401 to which a preprocessing mechanism 405 that performs blood separation is provided as shown in FIG. 12 can be used. In this case, the preprocessing mechanism 405 can include a measuring unit 451 that measures each property of a specimen in addition to a function of separating blood. The measuring unit 451 can measure, for example, viscosity of a specimen, an optical property of a specimen, or sucking pressure of a specimen. A control unit 441 can detect hemolysis and white turbidity based on optical properties measured by the measuring unit 451, or can detect coagulation based on sucking pressure of a specimen measured by the measuring unit 451. The writer 235 writes specimen information related to detected viscosity, hemolysis, white turbidity, and coagulation measured by the measuring unit 451 in the RFID tag 24 of the specimen vessel 21a transferred from the measuring unit 451, before the specimen vessel 21a is transferred to the specimen dispensation position P0. The reader 22 reads the specimen information in the RFID tag 24 thus written, and the control unit 441 performs the specimen dispensation control based on the specimen information read by the reader 22. Furthermore, although in the first to the third embodiments, the analyzers 1, 201, and 301 that analyze a blood specimen are described, it is, of course, not limited thereto, and can be applied to an analyzer that analyzes urine, fluid, or the like.

Moreover, the analyzers 1, 201, 301, and 401 can be implemented by using a computer system that executes a computer program prepared in advance. The computer system performs operations of the analyzer by reading and executing the computer program stored in a predetermined storage medium. The predetermined storage medium includes various kinds of recording media storing a computer program that can be read by the computer system, such as a "communication medium" or the like that retains a computer program for a short term at the time of transmission of the computer program such as a hard disk drive (HDD) provided inside or outside the computer system, in addition to a "portable physical medium" such as a flexible disk (FD), a CD-ROM, an MO disk, a DVD disk, an optical disk, and an IC card. Furthermore, the computer system performs operations of the analyzer by obtaining a computer program from an administration server or another computer system that is connected through a network line, and by executing the obtained computer program.

### INDUSTRIAL APPLICABILITY

As described, it is useful for an analyzer that includes a measurement system for dispensing a specimen in a specimen vessel into a reaction vessel to perform a measurement and analyzes the specimen based on a result of the measurement by the measurement system, and is particularly suitable for a case where useless analyses are desired to be avoided without using a large-scale analysis system.

## Claims

1. An analyzer that has a measurement system, which dispenses a specimen in a specimen vessel into a reaction vessel to perform a measurement, and analyzes the specimen based on a measurement result by the measurement system, the analyzer comprising:
an information storage medium that is attached to the specimen vessel, stores specimen information indicative of a state of the specimen, and is capable of communicating with an external device through radio waves of a predetermined frequency;
a reading unit that reads the specimen information stored in the information storage medium; and
a determining unit that determines whether the specimen in the specimen vessel, to which the information storage medium is attached, is in a state where a proper analysis is performable based on the specimen information in the information storage medium read by the reading unit.

2. The analyzer according to claim 1, wherein the information storage medium stores at least one of a specimen remaining amount of the specimen in the specimen vessel, to which the information storage medium is attached, whether coagulation is observed, whether hemolysis is observed, whether white turbidity is observed, viscosity, a contamination level, a date of extraction, and an analysis order, as the specimen information.

3. The analyzer according to claim 1, further comprising a control unit that inhibits the measurement system from dispensing the specimen in the specimen vessel, to which the information storage medium is attached, into the reaction vessel, when the determining unit determines that the specimen in the specimen vessel, to which the information storage medium is attached, is not in the state where a proper analysis is performable.

4. The analyzer according to claim 3, further comprising a writing unit that writes information in the information storage medium,
wherein the control unit causes the measurement system to dispense the specimen in the specimen vessel, to which the information storage medium is attached, into the reaction vessel, when the determining unit determines that the specimen in the specimen vessel, to which the information storage medium is attached, is in the state where a proper analysis is performable, and
the writing unit writes the specimen information that has been changed through the measurement by the measurement system or has been newly obtained with the measurement result by the measurement system in the information storage medium.

5. The analyzer according to claim 1, further comprising an output unit that outputs an alarm to notify that the specimen in the specimen vessel, to which the information storage medium is attached, is not in the state where a proper analysis is performable, when the determining unit determines that the specimen in the specimen vessel, to which the information storage medium is attached, is not in the state where a proper analysis is performable.

6. The analyzer according to claim 3, wherein the control unit causes the measurement system to dispense the specimen in the specimen vessel, to which the information storage medium is attached, into the reaction vessel based on a dispensation condition corresponding to the specimen information in the information storage medium read by the reading unit.

7. The analyzer according to claim 3, wherein a plurality of the measurement system is provided, and
the control unit sets a measurement order for the measurement systems, the measurement order corresponding to the specimen information in the information storage medium read by the reading unit, and performs measurements on the specimen in the specimen vessel, to which the information storage medium is attached, based on the measurement order.

8. An analysis method in an analyzer that includes a measurement system, which dispenses a specimen in a specimen vessel into a reaction vessel to perform a measurement, and analyzes the specimen based on a measurement result by the measurement system, the analysis method comprising:
reading specimen information stored in an information storage medium that is attached to the specimen vessel, stores specimen information indicative of a state of the specimen, and is capable of communicating with an external device through radio waves of a predetermined frequency; and
determining whether the specimen in the specimen vessel, to which the information storage medium is attached, is in a state where a proper analysis is performable, based on the specimen information in the information storage medium read at the reading.

9. The analysis method according to claim 8, wherein the information storage medium stores at least one of a specimen remaining amount of the specimen in the specimen vessel, to which the information storage medium is attached, whether coagulation is observed, whether hemolysis is observed, whether white turbidity is observed, viscosity, a contamination level, a date of extraction, and an analysis order, as the specimen information.

10. The analysis method according to claim 8, further comprising inhibiting the measurement system from dispensing the specimen in the specimen vessel, to which the information storage medium is attached, into the reaction vessel, when it is determined at the determining that the specimen in the specimen vessel, to which the information storage medium is attached, is not in the state where a proper analysis is performable.

11. The analysis method according to claim 8, further comprising:
dispensing the specimen in the specimen vessel, to which the information storage medium is attached, by the measurement system when it is determined at the determining that the specimen in the specimen vessel, to which the information storage medium is attached, is in the state where a proper analysis is performable; and
writing specimen information that has changed as a result of the measurement by the measurement system or specimen information that has been newly found from a result of measurement by the measurement system, in the information storage medium.

12. The analysis method according to claim 8, further comprising outputting an alarm to notify that the specimen in the specimen vessel, to which the information storage medium is attached, is not in the state where a proper analysis is performable, when it is determined at the determining that that the specimen in the specimen vessel, to which the information storage medium is attached, is not in the state where a proper analysis is performable.

13. The analysis method according to claim 11, wherein the dispensing is performed by the measurement system based on a dispensation condition corresponding to the specimen information in the information storage medium read at the reading unit to dispense the specimen in the specimen vessel, to which the information storage medium is attached, into the reaction vessel.

14. The analysis method according to claim 8, further comprising setting a measurement order of a plurality of the measurement systems corresponding to the specimen information in the information storage medium read at the reading unit.
